(19) Europäisches Patentamt
European Patent Office
Office européen des brevets

(11) **EP 2 124 116 B1**

(12) **EUROPÄISCHE PATENTSCHRIFT**

(45) Veröffentlichungstag und Bekanntmachung des Hinweises auf die Patenterteilung:
**20.11.2013   Patentblatt 2013/47**

(21) Anmeldenummer: **09006381.9**

(22) Anmeldetag: **12.05.2009**

(51) Int Cl.:
*G05B 19/401* *(2006.01)*      *G01B 21/04* *(2006.01)*

(54) **Verfahren zur Steuerung eines CNC-gesteuerten Koordinatenmessgerätes sowie Koordinatenmessgerät**

Method for controlling a CNC-controlled coordinate measuring device and coordinate measuring device

Procédé de commande d'un appareil de mesure des coordonnées à commande numérique assistée par ordinateur et appareil de mesure de coordonnées

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **21.05.2008   EP 08104058**

(43) Veröffentlichungstag der Anmeldung:
**25.11.2009   Patentblatt 2009/48**

(73) Patentinhaber: **Hexagon Metrology GmbH**
**35578 Wetzlar (DE)**

(72) Erfinder:
• **Richter, Andreas**
  **35581 Wetzlar-Münchholzhausen (DE)**
• **Müller, Hans-Jürgen**
  **35619 Braunfels-Neukirchen (DE)**

(74) Vertreter: **Knefel, Cordula**
**Patentanwältin,**
**Postfach 1924**
**35529 Wetzlar (DE)**

(56) Entgegenhaltungen:
DE-A1- 10 229 821      DE-A1- 19 614 883
US-A1- 2006 169 050

**Beschreibung**

Die Erfindung betrifft ein Verfahren zur Steuerung eines CNC-gesteuerten (computer numeric control) Koordinatenmessgerätes sowie ein Koordinatenmessgerät.

Zum Stand der Technik (DE 102 29 821 B4) gehören Koordinatenmessgeräte mit drei senkrecht zueinander angeordneten, linear verschiebbaren Bauteilen, deren Bewegungsumfang ein kartesisches Koordinatensystem aufspannt. Am Ende eines dieser Bauteile, üblicherweise als Pinole bezeichnet, ist meist ein Sensor angeordnet, der die Berührung eines mit ihm verbundenen Tastelementes mit einem Werkstück erkennt, das innerhalb des von den drei Linearachsen aufgespannten Koordinatensystems angeordnet ist. Dieser Sensor, der im Folgenden als "Tastkopf" bezeichnet wird, ist häufig ein taktiler Sensor, der ein festes Teil, beispielsweise ein Gehäuse, das mit der Pinole fest verbunden ist, umfasst, sowie ein gegenüber dem festen Teil in drei Dimensionen bewegliches Teil umfasst (üblicherweise und im weiteren Verlauf dieser Anmeldung als "Tastkopfschaukel" bezeichnet), das mit dem Tastelement, beispielsweise einer Tastkugel, über ein Abstandsstück verbunden ist. Das Abstandsstück ist üblicherweise ein Stab, der wiederum aus einem Tasterschaft und eventuell aus einer oder mehreren Verlängerungen und Verbindungsstücken besteht. Die Kombination von Tastelement und Abstandsstück wird üblicherweise und im weiteren Verlauf dieser Anmeldung als Taster bezeichnet.

Weiter gehören zum Stand der Technik rotatorische Achsen wie Drehtische oder so genannte Dreh-Schwenkgelenke, mit Hilfe derer das Werkstück und/oder der Tastkopf um horizontale und/oder vertikale Achsen gedreht werden können.

Wenn im Folgenden von "Achsen" gesprochen wird, so umfasst dieser Begriff alle möglichen Bewegungsachsen von Werkstück und/oder Tastkopf, seien sie linear oder rotatorisch. Der Schutzbereich der Erfindung soll sich ausdrücklich auf alle diese Bewegungsachsen beziehen.

Wenn die Achsen den Tastkopf so auf das Werkstück zubewegen, dass das Tastelement mit dem Werkstück in Kontakt kommt, wird die Tastkopfschaukel des Tastkopfes gegenüber seinem festen Teil ausgelenkt, wobei ein Antastsignal ausgelöst oder der Betrag und die Richtung dieser Auslenkung durch eine geeignete Sensorik gemessen wird.

Im Ruhezustand wird die Tastkopfschaukel durch Rückstellkräfte in einer Ruhestellung gehalten, wobei diese Rückstellkräfte beispielsweise durch Federn oder Kraftgeneratoren, wie beispielsweise Tauchspulensysteme erzeugt werden können.

Dadurch, dass das Tastelement zusammen mit dem Abstandsstück und der Tastkopfschaukel eine endliche Masse besitzen, unterliegt es bei Beschleunigung des Tastkopfes Trägheitskräften, die zu einer unerwünscht hohen Auslenkung der Tastkopfschaukel vor der Berührung des Tastelementes mit einem Werkstück führen können.

Im so genannten Scanbetrieb, bei dem das Tastelement unter kontinuierlicher Berührung über das Werkstück geführt wird, bildet das Feder-Masse-System, bestehend aus der Masse von Abstandsstück und Tastkopfschaukel, zusammen mit der Biegesteifigkeit des Abstandsstückes ein schwingungsfähiges System, das unter ungünstigen Betriebsbedingungen im Scanbetrieb angeregt wird, was zu Messfehlern führt.

Zum Stand der Technik (DE 102 29 821 B4) gehört ein Verfahren zur Steuerung eines Koordinatenmessgerätes mit variabler Tastermasse, bei dem Bewegungsbahnsollwerte eines Koordinatenmessgerätes, wie beispielsweise Beschleunigung und Geschwindigkeit in Abhängigkeit von der Masse des Tasters angepasst werden. Dadurch wird das technische Problem gelöst, dass das Tastelement bei dynamischer Verfahrweise unter Umständen aufgrund der auf das Tastelement wirkenden Trägheitskräfte ohne Berührung mit einem Werkstück so weit aus seiner Ruheposition ausgelenkt wird, dass eine Antastung vorgetäuscht wird.

Dieses zum Stand der Technik gehörende Verfahren weist den Nachteil auf, dass beispielsweise bei entsprechender Masse des Tasters die Geschwindigkeit und die Beschleunigung derart angepasst - insbesondere verringert - werden, dass die Gesamtmesszeit sich deutlich erhöht.

Weiterhin gehört zum Stand der Technik (DE 10 2005 032 749 A1) ein Verfahren zum Antasten eines Werkstückes mit einem Koordinatenmessgerät, bei dem der Vor- und Nachlauf einer Scanbahn in Abhängigkeit von der Steifigkeit oder der Masse eines Tasters angepasst wird. Dieses zum Stand der Technik gehörende Verfahren löst die Aufgabe, Ein- und Ausschwingvorgänge zu Beginn und am Ende einer Scanbahn in ihrem Einfluss auf das Messergebnis abzumildern. Dieses zum Stand der Technik gehörende Verfahren weist den Nachteil auf, dass vor dem Scannen und/oder nach dem Scannen das Tasterelement entlang einer Vorlauf- oder Nachlaufbahn bewegt wird, wodurch die Gesamtmesszeit sich deutlich erhöht.

Darüber hinaus gehört zum Stand der Technik (DE 10 2005 016 019 A1) ein Verfahren zur Einstellung der Empfindlichkeit des Tastsystems eines Koordinatenmesssystems, bei dem Betriebsparameter eines Tastsystems aufgrund eines vom Bediener des Koordinatenmessgerätes vorgegebenen Empfindlichkeitsparameters automatisch verändert werden, um beispielsweise Antastkräfte der Weichheit eines anzutastenden Werkstückes anzupassen. Weiter wird gemäß diesem Stand der Technik vorgeschlagen, einen weiteren Betriebsparameter des Koordinatenmessgerätes, etwa die Antastgeschwindigkeit in Abhängigkeit des vorgegebenen Empfindlichkeitsparameters zu verändern. Dieses zum Stand der Technik gehörende Verfahren weist den Nachteil auf, dass Schwingungen des Tastsystems gemäß diesem Verfahren nicht minimiert werden.

Weiterhin gehört zum Stand der Technik (DE 102 29 821 B4) ein Koordinatenmessgerät und ein Verfahren zur Steuerung eines Koordinatenmessgerätes mit variabler Tastkopfmasse. Gemäß dieser Druckschrift ist eine Steuerung mit der Veränderung von Parametern nicht vorgesehen, so dass dieses zum Stand der Technik gehörende Verfahren ebenfalls den Nachteil aufweist, dass Schwingungen des Tastsystems nicht minimiert werden.

Zum Stand der Technik (EP 0 469 617 B1) gehört darüber hinaus ein System, welches aus einem geschlossenen Regelkreis mit einem adaptiven Filter besteht. Gemäß diesem System wird eine Maximalbeschleunigung einer Motordrehzahl-Steuervorrichtung begrenzt. Diese Maximalbeschleunigung ist eine Eingangsgröße für einen Regler und kein Reglerparameter, so dass eine an verschiedene Tastsysteme eines Koordinatenmessgerätes angepasste Regelung gemäß dieser Druckschrift nicht durchführbar ist.

Unter dem Begriff "Reglerparameter" soll hier und im weiteren Verlauf der Anmeldung ausdrücklich weder eine Eingangsgröße (Sollwert) noch eine Stellgröße oder eine Regelgröße (Istwert) verstanden werden, sondern ausschließlich Größen, die die Amplitudenübertragungsfunktion des Reglers im Amplituden-Frequenz-Raum beeinflussen, also zum Beispiel die Kreisverstärkung eines Proportionalreglers.

Das der Erfindung zugrunde liegende technische Problem besteht darin, ein Verfahren zur Steuerung eines CNC-gesteuerten Koordinatenmessgerätes anzugeben, bei dem die Anregung des schwingungsfähigen Systems, bestehend aus Tastkopfschaukelmasse inklusive Tastermasse und Tastersteifigkeit (Biegesteifigkeit des Tastelementes mit Abstandsstück) minimiert wird. Darüber hinaus soll ein Koordinatenmessgerät angegeben werden, bei dem die Anregung des schwingungsfähigen Systems, bestehend aus Tastkopfschaukelmasse inklusive Tastermasse und Tastersteifigkeit, minimiert wird.

Dieses technische Problem wird durch ein Verfahren mit den Merkmalen gemäß Anspruch 1 sowie durch ein Koordinatenmessgerät mit den Merkmalen gemäß Anspruch 11 gelöst.

Das erfindungsgemäße Verfahren zur Steuerung eines CNC-gesteuerten Koordinatenmessgerätes mit einer Plattform zur Aufnahme eines Werkstückes mit mindestens einer Struktur, die einen Berührungssensor trägt, wobei diese Struktur mindestens eine erste mechanische Eigenfrequenz aufweist, wobei die Plattform, die das Werkstück aufnimmt und die Struktur, die den Berührungssensor trägt, relativ zueinander beweglich sind, mit einem Taster, bestehend aus wenigstens einem Tastelement und einem Abstandsstück, wobei das Tastelement mit dem Berührungssensor über das Abstandsstück verbunden ist und dessen Berührung mit einem auf der Plattform angeordneten Werkstück von dem Berührungssensor erkannt wird, mit mindestens einer motorischen Antriebseinheit zur Ausführung einer Relativbewegung zwischen dem Werkstück und dem Tastelement, wobei die motorische Antriebseinheit mindestens eine zweite Eigenfrequenz aufweist, die verschieden ist von der ersten Eigenfrequenz der den Berührungssensor tragenden Struktur, mit mindestens einem Regler zur Regelung der Antriebseinheit, wobei der mindestens eine Regler wenigstens einen Reglerparameter aufweist, der die Übertragungsfunktion des Reglers definiert, zeichnet sich dadurch aus, dass mindestens einer der Reglerparameter als Funktion des Abstandes des Tastelementes von einem Referenzpunkt des Berührungssensors und/oder als Funktion von elastischen Eigenschaften des Abstandsstückes in Abhängigkeit des jeweils zum Messen verwendeten Tasters derart verändert wird, dass der Reglerparameter sich zwischen den durch die erste Eigenfrequenz der den Berührungssensor tragenden Struktur und durch die zweite Eigenfrequenz der motorischen Antriebseinheit definierten Grenzen bewegt.

Mit dem erfindungsgemäßen Verfahren ist es möglich, nach dem Einwechseln eines Tasters, der aus Abstandsstück und Tastelement besteht, die für diesen Taster optimalen Reglerparameter dem Regler vorzugeben, so dass das schwingungsfähige System keine oder lediglich minimale Schwingungen ausführt.

Das Abstandsstück ist üblicherweise ein Stab, der wiederum aus einem Tasterschaft und eventuell aus einer oder mehreren Verlängerungen und Verbindungselementen besteht. Das Tastelement ist üblicherweise eine Tastkugel. Der Taster, der je nach Anforderung an die Messaufgabe eingewechselt wird, besteht aus dem Abstandsstück und dem Tastelement.

Der Referenzpunkt bei einem Koordinatenmesssystem ist üblicherweise die Stelle, an der der Taster mit der Tastkopfschaukel verbunden ist. Das heißt, bei einer Tasterlänge gleich Null würde das Tastelement (Tastkugel) im Referenzpunkt angeordnet sein. Gemäß der Erfindung wird der Referenzpunkt dazu genutzt, die Tasterlänge zu bestimmen, da das Koordinatenmessgerät automatisch erkennen soll, wie lang der Taster ist. Ist dem Koordinatenmessgerät die Länge des Tasters oder seine elastischen Eigenschaften (Biegung) bekannt, werden die entsprechenden Reglerparameter in dem mindestens einen Regler zur Regelung der motorischen Antriebseinheiten verändert.

Im Einzelnen wird das Verfahren derart ausgeführt, dass der Steuerung der Abstandsvektor des Tastelementes (Tastkugel) vom Referenzpunkt des Berührungssensors und/oder die elastischen Eigenschaften des Abstandsstückes in Abhängigkeit des Tasters mitgeteilt werden, worauf die Steuerung hieraus Reglerparameter generiert, die beim Verfahren der Achsen des Koordinatenmessgerätes zum Zwecke der Antastung oder des Scannens verwendet werden.

Die Eingabe der Eigenschaften von Abstandsstück in Verbindung mit dem Tastelement kann manuell, zum Beispiel über eine Tastatur oder automatisch erfolgen, indem die Steuerung ein Berechnungsmodul umfasst, das aus den Kalibrierdaten der fraglichen Kombination aus Abstandsstück und Tastelement die Reglerparameter berechnet.

Unter Kalibrieren wird in diesem Zusammenhang ein gemäß dem Stand der Technik bekannter Vorgang verstanden, bei dem die elastischen Eigenschaften einer Kombination aus Tastelement und Abstandsstück durch mehrfaches Antasten eines Normkörpers aus verschiedenen Richtungen dadurch bestimmt werden, dass aus den Abweichungen des Messergebnisses von den bekannten Werten zur Form und Größe des Normkörpers eine Matrix erzeugt wird, die die elastischen Eigenschaften der fraglichen Kombination aus Tastelement und Abstandsstück beschreibt. Der Normkörper ist üblicherweise eine Kugel mit bekanntem Durchmesser und bekannter Formabweichung. Die berechnete Matrix besitzt üblicherweise eine 3x3-Gestalt.

Gemäß einer vorteilhaften Ausführungsform kann das erfindungsgemäße Verfahren beim gesteuerten Scannen eingesetzt werden. Beim gesteuerten Scannen wird der Tastkopf entlang einer durch Soll-Daten vorgegebenen Bahn geführt und die Abweichung der Ist- von der Soll-Kontur gemessen.

Das erfindungsgemäße Verfahren kann vorteilhaft jedoch auch beim geregelten Scannen eingesetzt werden. Beim geregelten Scannen wird die Auslenkung des Tastkopfes in einem Regelkreis auf einen Sollwert geregelt. Zur Steuerung wird lediglich eine Fläche vorgegeben, die die Werkstückoberfläche schneidet und in der die Tastkugel geführt wird. Dieses Verfahren ist universell einsetzbar jedoch schwingungsanfällig, da hierbei über das gesamte Koordinatenmessgerät ein Regelkreis geschlossen werden muss, in den aus der gescannten Kontur beliebige Frequenzen eingekoppelt werden. Die erreichbare Geschwindigkeit ist bei gegebener Genauigkeit daher durch die Dynamik des Gesamtsystems begrenzt.

Geregeltes Scannen reagiert empfindlich auf verschiedene schwingungsfähige Maschinenstrukturen, die beispielsweise durch Antriebe, die nicht im Schwerpunkt der jeweiligen Struktur angreifen, zu Schwingungen angeregt werden.

Dies gilt insbesondere für große weiche Strukturen mit schwingungsfähigen Elementen (sehr niedrige Eigenfrequenzen), deren Einfluss nicht in den Führungsübertragungsfunktionen der Antriebszüge der einzelnen Achsen auftreten und somit nur mittels zusätzlicher teurer Sensoren (zum Beispiel Beschleunigungssensoren) inklusive aufwändiger Signalverarbeitung online erfasst und bedämpft werden können.

Zur Lösung dieses Problems werden mit dem erfindungsgemäßen Verfahren die Führungsübertragungsfunktionen der Antriebsregler mittels Parameteradaption so eingestellt, dass der Einfluss der nicht erfassten schwingungsfähigen Maschinenstrukturen auf das Scanergebnis minimiert wird:

- Bei weichen (langen) Tastern finden sich niederfrequente Maschinenstrukturschwingungen hauptsächlich in der Tasterbiegung wieder, das heißt, die Auslenkung der Tastkopfschaukel wird nur im geringen Maße von der Maschinenstruktur beeinflusst. Daraus folgt, dass eine Parameterabstimmung auf die offline/online ermittelte Parameterabstimmung auf die offline/online ermittelte Eigenfrequenz der Antriebskomponenten das bestmögliche Ergebnis bringt.

- Bei steifen (kurzen) Tastern wird die Tastkopfschaukel stärker von der niederfrequenten Maschinenstrukturschwingung beeinflusst. In diesem Fall bringt eine Parameterabstimmung auf die offline ermittelte Frequenz der Maschinenstrukturschwingung das bestmögliche Ergebnis.

Gemäß einer vorteilhaften Ausführungsform der Erfindung wird als Berührungssensor ein schaltender Tastkopf oder ein messender Tastkopf verwendet.

Gemäß einer weiteren vorteilhaften Ausführungsform der Erfindung wird ein Regler mit einer Kaskadenstruktur verwendet, wobei ein Lageregler für die Lage einer zu regelnden Achse, ein Geschwindigkeitsregler für die Geschwindigkeit einer die zu regelnde Achse antreibenden motorischen Antriebseinheit (konventioneller Motor oder Linearmotor) und ein Stromregler für die Antriebskraft oder das Antriebsdrehmoment vorgesehen sind. Dem Lageregler ist der Geschwindigkeitsregler und dem Geschwindigkeitsregler ist der Stromregler unterlegt.

Während der kontinuierlichen Abtastung eines Werkstückes (Scanbetrieb) wird zusätzlich zum Lageregler ein Scanregler verwendet, der die Auslenkung der Tastkopfschaukel relativ zum festen Teil des Tastkopfes betragsmäßig konstant hält und dem Lageregler überlagert ist, das heißt, die Stellgröße des Scanreglers ist die Sollgröße des Lagereglers. Es ist auch möglich, als Regler anstelle des Kaskadenreglers einen Zustandsregler zu verwenden.

Gemäß einer weiteren vorteilhaften Ausgestaltung der Erfindung wird als Regler ein digitaler Regler verwendet.

Gemäß einer weiteren vorteilhaften Ausführungsform der Erfindung wird wenigstens ein Reglerparameter des Lagereglers oder des Geschwindigkeitsreglers oder des Stromreglers als Funktion des Abstandes des Tastelementes von dem Referenzpunkt des Berührungssensors und/oder als Funktion der elastischen Eigenschaften des Abstandsstückes verändert.

Gemäß einer weiteren vorteilhaften Ausgestaltung der Erfindung wird eine Kombination aus Reglerparametern von Lageregler und/oder Geschwindigkeitsregler und/oder Stromregler als Funktion des Abstandes des Tastelementes von dem Referenzpunkt des Berührungssensors und/oder als Funktion der elastischen Eigenschaften des Abstandsstückes in Abhängigkeit der eingewechselten Tasterkombination derart verändert, dass der Reglerparameter sich zwischen den durch die erste Eigenfrequenz der den Berührungssensor tragenden Struktur und durch die zweite Eigenfrequenz der motorischen Antriebseinheit definierten Grenzen bewegt.

Eine weitere Möglichkeit, die Steuerung über die Eigenschaften der verwendeten Kombination aus Abstandsstück und Tastelement zu informieren, besteht darin, dass die ein Gewicht und eine Steifigkeit charakterisierenden Größen von Tastelementen und Abstandsstücken in einer Datenbank abgespeichert sind und beim Einwechseln der jeweiligen Kombination aus Tastelement und Abstandsstück automatisch zu einer Anpassung der Reglerparameter führen. In der Datenbank sind entweder die genannten Eigenschaften oder direkt die Reglerparametersätze der zu verwendenden Kombinationen aus Abstandsstück und Tastelement abgelegt.

Gemäß einer weiteren vorteilhaften Ausführungsform der Erfindung werden die zur Anpassung der Reglerparameter notwendigen charakteristischen Größen aus einem Ergebnis einer Tasterkalibrierung gewonnen.

Vorteilhaft werden die Reglerparameter während eines Scanlaufes kontinuierlich angepasst.

Die Erfindung betrifft darüber hinaus ein Koordinatenmessgerät mit einer Plattform zur Aufnahme eines Werkstückes mit mindestens einer Struktur, die einen Berührungssensor trägt, wobei diese Struktur mindestens eine erste mechanische Eigenfrequenz aufweist, wobei die Plattform, die das Werkstück aufnimmt und die Struktur, die den Berührungssensor trägt, relativ zueinander beweglich sind, mit einem Taster, bestehend aus wenigstens einem Tastelement und einem Abstandsstück, wobei das Tastelement mit dem Berührungssensor über das Abstandsstück verbunden ist und dessen Berührung mit einem auf der Plattform angeordneten Werkstück von dem Berührungssensor erkannt wird, mit einer motorischen Antriebseinheit zur Ausführung der Relativbewegung zwischen dem Werkstück und dem Tastelement, wobei die motorische Antriebseinheit mindestens eine zweite Eigenfrequenz aufweist, die verschieden ist von der ersten Eigenfrequenz der den Berührungssensor tragenden Struktur, mit einer Steuerung, die mindestens einen Regler zur Regelung der Antriebseinheit aufweist, wobei der mindestens eine Regler wenigstens einen Reglerparameter aufweist, der die Übertragungsfunktion des Reglers definiert, zeichnet sich dadurch aus, dass das Koordinatenmessgerät eine Berechnungseinheit aufweist, die als eine die die Übertragungsfunktion des wenigstens einen Reglers charakterisierenden Reglerparameter als Funktion des Abstandes des Tastelementes von einem Referenzpunkt des Berührungssensors und/oder als Funktion von elastischen Eigenschaften des Abstandsstückes in Abhängigkeit von der jeweils eingewechselten Tasterkombination verändernde Berechnungseinheit ausgebildet ist, und dass die Berechnungseinheit als eine den mindestens einen Reglerparameter derart verändernde Berechnungseinheit ausgebildet ist, dass der Reglerparameter sich zwischen den durch die erste Eigenfrequenz der den Berührungssensor tragenden Struktur und durch die zweite Eigenfrequenz der motorischen Antriebseinheit definierten Grenzen bewegt.

Unter der "motorischen Antriebseinheit" wird hier und im weiteren Verlauf der Anmeldung ausdrücklich nicht nur der Motor verstanden, sondern zusätzlich die gesamte mechanische Übertragungsstrecke vom Motor bis zur Ankopplung an die zu bewegende Struktur, wie zum Beispiel Übersetzungsgetriebe.

Gemäß einer besonders bevorzugten Ausführungsform der Erfindung weist die Steuerung zusätzlich eine Datenbank auf, in der die ein Gewicht und eine Steifigkeit charakterisierenden Größen von Tastelementen und Abstandsstücken für verschiedene Kombinationen von Tastelementen und Abstandsstücken abgelegt sind und bei Verwendung der jeweiligen Kombination zur Berechnung der Reglerparameter herangezogen werden.

Gemäß einer weiteren vorteilhaften Ausgestaltung der Erfindung weist die Steuerung ein Modul auf, das als ein die Ergebnisse einer Tasterkalibrierung zur Berechnung der Reglerparameter verwendendes Modul ausgebildet ist.

Der Berührungssensor ist vorteilhaft als schaltender Tastkopf oder als messender Tastkopf ausgebildet.

Das Koordinatenmessgerät weist vorteilhaft drei lineare bewegliche Achsen auf, die ein kartesisches Koordinatensystem aufspannen. Es ist jedoch auch möglich, ein Koordinatenmessgerät in parallelkinematischer Bauweise, wie zum Beispiel Hexapoden, einzusetzen.

Gemäß einer vorteilhaften Ausführungsform der Erfindung weist der Regler eine Kaskadenstruktur auf, wobei ein Lageregler für die Lage der zu regelnden Achse, ein Geschwindigkeitsregler für die Geschwindigkeit des die zu regelnde Achse antreibenden motorischen Antriebes und ein Stromregler für die Antriebskraft oder das Drehmoment des motorischen Antriebes vorgesehen sind. Dem Lageregler ist der Geschwindigkeitsregler und dem Geschwindigkeitsregler ist der Stromregler unterlegt.

Der Regler kann gemäß einer besonders bevorzugten Ausführungsform auch als Zustandsregler ausgebildet sein. In jedem Falle handelt es sich bei den zu ändernden Parametern um Parameter, die die Übertragungsfunktion des jeweiligen Reglers beeinflussen. Vorteilhaft ist der Regler als digitaler Regler ausgebildet.

Weitere Merkmale und Vorteile der Erfindung ergeben sich anhand der zugehörigen Zeichnung, in der ein Ausführungsbeispiel eines erfindungsgemäßen Koordinatenmessgerätes nur beispielhaft dargestellt ist. In der Zeichnung zeigen:

Fig. 1      ein Koordinatenmessgerät in Portalbauweise in perspektivischer Ansicht;

Fig. 2      eine Prinzipdarstellung einer Regelung mit in einer Datenbank abgespeicherten Taster- daten;

Fig. 3     eine grafische Darstellung der Biegungs- werte, aufgetragen gegen die Wichtungsfakto- ren;

Fig. 4     eine Prinzipdarstellung einer Regelung mit einem Berechnungsmodul aufgrund von Kali- brierdaten.

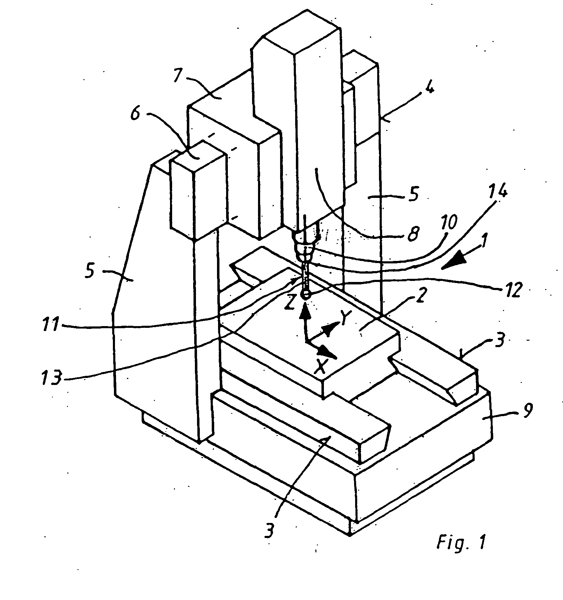

Fig. 1 zeigt ein Koordinatenmessgerät 1 mit einem in X-Richtung verschiebbaren Messtisch 2, der auf Führungen 3 verschiebbar angeordnet ist. Ein Portal 4, welches Stützen 5 aufweist und welches nicht verschiebbar ausgebildet ist, trägt an einer Traverse 6 einen in Y-Richtung verschiebbaren Schlitten 7, an dem wiederum eine in Z-Richtung verschiebbare Pinole 8 angeordnet ist. Die Führungen 3 und die Stützen 5 sind an einem Grundbett 9 des Koordinatenmessgerätes 1 angeordnet. Der Schlitten 7 und die Pinole 8 sind in Fig. 1 lediglich schematisch dargestellt, um die Funktionsweise des Koordinatenmessgerätes 1 zu erläutern.

An der Pinole 8 ist ein Tastkopf 10 (Berührungssensor) angeordnet, an dem ein Taster 11, bestehend aus einem Stab 13 (Abstandsstück), der eine Tastkugel 12 (Tastelement) trägt, angeordnet ist. Grundsätzlich ist der Taster 11 gegen andere, das heißt Taster mit einem Tasterschaft und eventuellen Verlängerungen auswechselbar. Eine Schnittstelle 14 zwischen dem Tasterschaft 13 und dem Tastkopf 10 stellt den Referenzpunkt des Berührungssensors dar.

Im Scanbetrieb, bei dem die Tastkugel 12 unter kontinuierlicher Berührung über ein Werkstück (nicht dargestellt) geführt wird, wobei das Werkstück auf dem Messtisch 2 angeordnet ist, bildet das Feder-Masse-System, bestehend aus der Masse des Abstandsstückes 13 in Verbindung mit der Masse des beweglichen Tastkopfteiles zusammen mit der Biegesteifigkeit des Abstandsstückes 13 ein schwingungsfähiges System, das unter ungünstigen Betriebsbedingungen im Scanbetrieb angeregt wird, was wiederum zu Messfehlern führt.

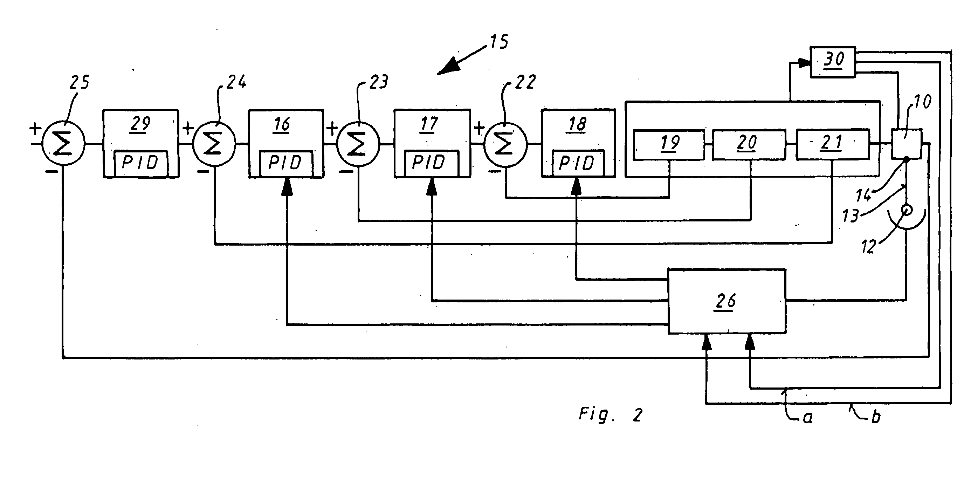

Um ein Aufschwingen dieses Systems zu vermeiden in Abhängigkeit von dem eingewechselten Taster 11, ist gemäß Fig. 2 ein Regler 15 für die Steuerung des Koordinatenmessgerätes vorgesehen. Der Regler 15 weist einen Lageregler 16, einen Geschwindigkeitsregler 17 und einen Stromregler 18 auf, wobei dem Lageregler 16 für die Lage der zu regelnden Achse der Geschwindigkeitsregler 17 für die Geschwindigkeit des motorischen Antriebes und dem Geschwindigkeitsregler 17 der Stromregler 18 für die Antriebskraft oder das Drehmoment des motorischen Antriebes unterlegt ist.

Während der kontinuierlichen Abtastung eines Werkstückes (Scanbetrieb) wird zusätzlich zum Lageregler 16 ein Scanregler 29 verwendet, der die Auslenkung der Tastkopfschaukel (nicht dargestellt) relativ zum festen Teil des Tastkopfes 10 betragsmäßig konstant hält und dem Lageregler 16 überlagert ist, das heißt, die Stellgröße des Scanreglers 29 ist die Sollgröße des Lagereglers 16.

Von einer Strommessvorrichtung 19, einer Geschwindigkeitsmessvorrichtung 20 und einem Maßstab 21 werden Ist-Signale erfasst, die in Vergleichsvorrichtungen 22, 23, 24 eingespeist werden. Im Falle rotatorischer Achsen wird der Maßstab durch einen Drehwinkelgeber ersetzt.

In den Vergleichsvorrichtungen 22, 23, 24, 25 werden die Ist-Signale mit den eingespeisten Soll-Signalen verglichen.

Die Regler 16, 17, 18 sind gemäß Fig. 2 nur beispielsweise als PID-Regler ausgebildet. Die Reglerparameter zur Regelung der Antriebseinheit (nicht dargestellt) der Achsen des Koordinatenmessgerätes sind für jeden verwendeten Taster 11 mit Stab 13 und Tastkugel 12 in einer Datenbank 26 abgelegt und werden in die Regler 16, 17, 18 eingespeist. In der Datenbank sind entweder die Eigenschaften der verwendeten Kombination aus Stab 13 (Abstandsstück) und Tastkugel 12 (Tastelement) abgelegt, oder es sind direkt die Reglerparametersätze zu den verwendeten Kombinationen aus Abstandsstück 13 und Tastelement 12 abgelegt.

Das bedeutet, dass die Reglerparameter in Abhängigkeit der verwendeten Kombination aus Abstandsstück 13 und Tastelement 12 in den Reglern 16, 17, 18 verwendet werden.

Die Struktureigenfrequenz a und die Antriebseigenfrequenz b der mechanischen Struktur 30 werden der Datenbank 26 zugeführt. Darüber hinaus ist eine Rückwirkung auf den Tastkopf 10 vorhanden.

Für den Ablauf der Parameteradaption wird folgendes Beispiel angegeben:

- (S) Offline-Bestimmung von Eigenfrequenz: $f\_S$ und Dämpfung: $d\_S$ der Maschinenstrukturen mit sehr niedrigen Eigenfrequenzen und Berechnen der zugehörigen Parametergrenzen für ein robustes Reglerverhalten.

- (Z) Offline-/Online-Bestimmung von Eigenfrequenz: $f\_Z$ und Dämpfung: $d\_Z$ der Antriebszüge und Berechnen der zugehörigen Parametergrenzen für ein robustes Reglerverhalten. Dies geschieht mit Hilfe der ohnehin vorhandenen Standardzustandssensoren, wie Längenschrittgeber für die Achsen und Tacho für den Motor.

- (T) Online-Erfassung der Tastkopfschwingungen (Frequenz: $f\_T$, Dämpfung: $d\_T$) über die Auslenkung der Tastkopfschaukel.

- (B) Online-Erfassung der Biegungswerte (= reziproke Steifigkeit) des jeweils eingesetzten zulässigen Tasters über die Steuersoftware innerhalb der zulässigen Biegungswertgrenzen $B\_{min}$ und $B\_{max}$ oder Offline-Erfassung über die Länge.

- (P) Online-Parameteradaption (Algorithmus).

Mit

S = schwingungsfähige Maschinenstruktur
Z = Standard-Zustandssensor
T = Tastkopf
B = Tasterbiegung
P = Parameter.

Ausführungsbeispiel:

Ein Verfahren zum Einstellen des aktuellen D-Anteils Kd_akt im PID-Positionsregelkreis für eine gegebene aktuelle Tasterbiegung B_akt kann folgendermaßen durchgeführt werden:
Offline-Bestimmung der Eigenfrequenzen:

f_S = Eigenfrequenz der Maschinenstruktur
f_Z = Eigenfrequenz des Antriebszuges

Die Laplacetransformierte der Übertragungsfunktion eines PID-Reglers lautet:

$$F_R(s) = K_I * (1 + (K_P/K_I) * s + (K_D/K_I) * s^2)/s$$

mit $K_1$, $K_P$, $K_D$ den I-, P- und D-Anteilen des Reglers sowie der komplexen Variablen s.
Die Laplacetransformierte der Übertragungsfunktion einer allgemeinen schwingungsfähigen mechanischen Struktur lautet:

$$F_S(s) = 1/(1 + 2 * d_R * 1/(2 * \pi * f_R) * s + 1/(2 * \pi * f_R)^2 * s^2).$$

Hierbei ist $f_R$ die Eigenfrequenz und $d_R$ die Dämpfung der mechanischen Struktur.
Durch Koeffizientenvergleich erhält man $K_D$ zu

$$K_D = K_I/(2 * \pi * f_R)^2.$$

Auf dieses Beispiel bezogen errechnen sich die zulässigen Parametergrenzen zu

$$Kd\_min = K_I/(2 * \pi * f\_Z)^2$$

$$Kd\_max = K_I/(2 * \pi * f\_S)^2.$$

Hierbei ist f_Z größer als f_S.
Mit den Biegungswertgrenzen aus dem zulässigen Tastersortiment
B_min und B_max
errechnet sich der aktuelle D-Anteil über die Funktion h() und den Wichtungsfaktoren g1 und g2 zu

$$Kd\_akt = h(g1 * Kd\_max, g2 * Kd\_min)$$

Es hat sich gezeigt, dass mit

$$g1 = (B\_max - B\_akt)/(B\_max - B\_min)$$

$$g2 = (B\_akt - B\_min)/(B\_max - B\_min)$$

$$g1 + g2 = 1\ (100\%)$$

$$h() = g1^n * Kd\_max + g2^k * Kd\_min,$$

wobei n und k ganze Zahlen sind,
ein zuverlässiges und robustes Scannen mit allen Tastern aus dem zulässigen Tastersortiment auch ohne zusätzliche teure Sensoren und aufwändiger Signalverarbeitung möglich ist.

Die Wahl der Potenzen n und k ist gerätespezifisch. Je nachdem, wie die Potenzen ausgewählt werden, wird die Art des Überganges zwischen den Biegungswerten B_min und B_max beschrieben.

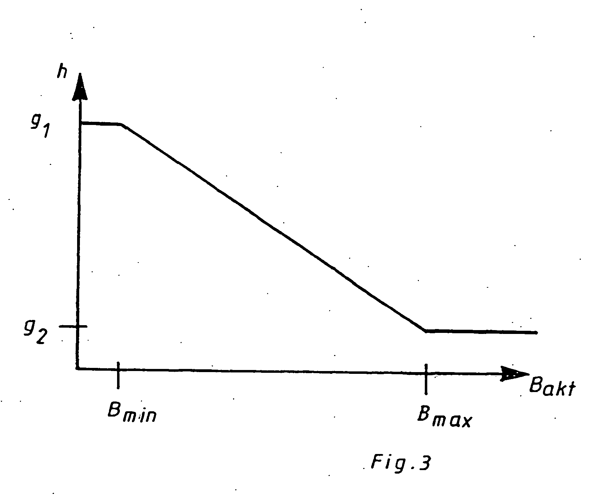

Für n = 1 und k = 1 ist der Übergang in Fig. 3 dargestellt.

Auf diese Weise können bei Bedarf alle in der Reglerkaskade vorhandenen, die Übertragungsfunktion des Reglers charakterisierenden Parameter innerhalb ihrer zulässigen Grenzen, die durch die Eigenfrequenzen von Maschinenstruktur und Antriebszug sowie der zulässigen Biegungsgrenzen für die Taster bestimmt werden, so variiert werden, dass das Scanverhalten für jeden aktuellen Tasterbiegungswert optimal ist.

Der Vorteil des erfindungsgemäßen Verfahrens und der erfindungsgemäßen Vorrichtung besteht darin, dass kein Sensor für die aktive Bedämpfung sehr niedriger Eigenfrequenzen notwendig ist, wodurch eine Kostenersparnis auftritt, der Aufwand minimiert wird und das Systemverhalten trotzdem robust ist.

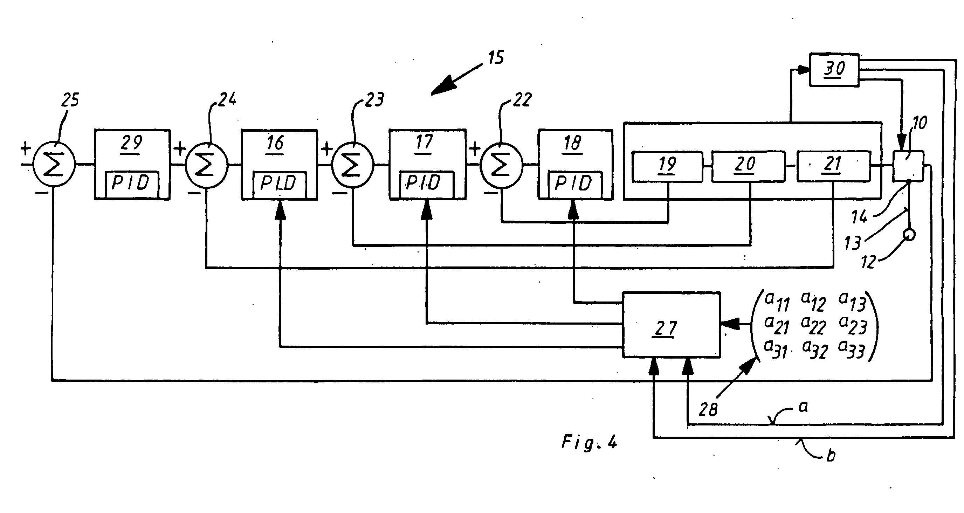

Gemäß Fig. 4 werden die Reglerparameter nicht aus einer Datenbank, sondern aus einem Berechnungsmodul 27 in die Regler 16, 17, 18 eingegeben. Das Berechnungsmodul 27 berechnet aus Kalibrierdaten der fraglichen Kombination aus Abstandsstück 13 und Tastelement 12 die Reglerparameter. Die elastischen Eigenschaften dieser Kombination aus Tastelement 12 und Abstandsstück 13 werden durch mehrfaches Antasten eines Normkörpers aus verschiedenen Richtungen dadurch bestimmt, dass aus den Abweichungen des Messergebnisses von den bekannten Werten für Form und Größe des Normkörpers eine Matrix 28 erzeugt wird, die die elastischen Eigenschaften der fraglichen Kombination beschreibt. Der Normkörper ist üblicherweise eine Kugel mit bekanntem Durchmesser und bekannter Formabweichung. Die berechnete so genannte Biegematrix hat gemäß Fig. 3 eine 3x3-Gestalt. Es sind aber auch andere Normkörper oder Biegematrizen respektive Biegefunktionen denkbar, ohne den Schutzbereich der Erfindung zu verlassen.

Beispielsweise leitet eine übergeordnete so genannte Hostsoftware an die Steuerung des Koordinatenmessgerätes 1 weiter, welcher Taster 12, 13 eingewechselt ist und welche Kalibriermatrix 28 zu verwenden ist.

Die Struktureigenfrequenz a und die Antriebseigenfrequenz b der mechanischen Struktur 30 werden dem Berechnungsmodul 27 zugeführt. Gleichzeitig ist eine Rückwirkung auf den Tastkopf 10 vorhanden.

Bezugszahlen

1    Koordinatenmessgerät

2    Messtisch (Plattform)

3    Führungen

4    Portal

5    Stützen

6    Traverse

7 Schlitten

8 Pinole

9 Grundbett

10 Tastkopf (Berührungssensor)

11 Taster

12 Tastkugel (Tastelement)

13 Stab (Abstandsstück)

14 Referenzpunkt des Berührungssensors 10

15 Regler

16 Lageregler

17 Geschwindigkeitsregler

18 Stromregler

19 Strommessvorrichtung

20 Geschwindigkeitsmesser

21 Maßstab oder Winkelgeber

22 Vergleichsvorrichtung

23 Vergleichsvorrichtung

24 Vergleichsvorrichtung

25 Stelle

26 Datenbank

27 Berechnungsmodul

28 Matrix

29 Scanregler

30 mechanische Struktur

a Struktureigenfrequenz

b Antriebseigenfrequenz

**Patentansprüche**

1. Verfahren zur Steuerung eines CNC-gesteuerten Koordinatenmessgerätes (1)

    - mit einer Plattform (2) zur Aufnahme eines Werkstückes,

- mit mindestens einer Struktur, die einen Berührungssensor (10) trägt,
- wobei diese Struktur mindestens eine erste mechanische Eigenfrequenz aufweist,
- wobei die Plattform (2), die das Werkstück aufnimmt, und die Struktur, die den Berührungssensor (10) trägt, relativ zueinander beweglich sind,
- mit einem Taster (11), bestehend aus wenigstens einem Tastelement (12) und einem Abstandsstück (13) wobei das Tastelement mit dem Berührungssensor über das Abstandsstück verbunden ist, und dessen Berührung mit einem auf der Plattform angeordneten Werkstück von dem Berührungssensor (10) erkannt wird,
- mit mindestens einer motorischen Antriebseinheit zur Ausführung einer Relativbewegung zwischen dem Werkstück und dem Tastelement (12),
- wobei die motorische Antriebseinheit mindestens eine zweite Eigenfrequenz aufweist, die verschieden ist von der ersten Eigenfrequenz der den Berührungssensor tragenden Struktur,
- mit mindestens einem Regler (15) zur Regelung der Antriebseinheit, wobei der mindestens eine Regler wenigstens einen Reglerparameter aufweist, der eine Übertragungsfunktion des Reglers definiert,

**dadurch gekennzeichnet, dass** mindestens einer der Reglerparameter als Funktion des Abstandes des Tastelementes (12) von einem Referenzpunkt (14) des Berührungssensors (10) und/oder als Funktion von elastischen Eigenschaften des Abstandsstückes (13) in Abhängigkeit des jeweils zum Messen verwendeten Tasters (11) derart verändert wird, dass der Reglerparameter sich zwischen den durch die erste Eigenfrequenz der den Berührungssensor tragenden Struktur und durch die zweite Eigenfrequenz der motorischen Antriebseinheit definierten Grenzen bewegt.

2. Verfahren nach Anspruch 1, **dadurch gekennzeichnet, dass** als Berührungssensor (10) ein schaltender Tastkopf (10) oder ein messender Tastkopf verwendet wird.

3. Verfahren nach einem der vorhergehenden Ansprüche, **dadurch gekennzeichnet, dass** ein Regler (15) mit einer Kaskadenstruktur verwendet wird, wobei ein Lageregler (16) für die Lage einer zu regelnden Achse, ein Geschwindigkeitsregler (17) für die Geschwindigkeit der motorischen Antriebseinheit und ein Stromregler (18) für die Antriebskraft oder das Drehmoment der motorischen Antriebseinheit vorgesehen sind, und dass dem Lageregler (16) der Geschwindigkeitsregler (17) und dem Geschwindigkeitsregler (17) der Stromregler (18) unterlegt ist.

4. Verfahren nach Anspruch 3, **dadurch gekennzeichnet, dass** dem Lageregler (16) ein Scanregler (29) überlagert ist.

5. Verfahren nach einem der Ansprüche 1 oder 2, **dadurch gekennzeichnet, dass** als Regler (15) ein Zustandsregler oder ein digitaler Regler verwendet wird.

6. Verfahren nach einem der Ansprüche 3 oder 4, **dadurch gekennzeichnet, dass** wenigstens ein Reglerparameter des Scanreglers (29) oder des Lagereglers (16) oder des Geschwindigkeitsreglers (17) oder des Stromreglers (18) als Funktion des Abstandes des Tastelementes (12) von dem Referenzpunkt (14) des Berührungssensors (10) und/oder als Funktion der elastischen Eigenschaften des Abstandsstückes (13) in Abhängigkeit der jeweils eingewechselten Tasterkombination verändert wird.

7. Verfahren nach einem der Ansprüche 3 oder 4, **dadurch gekennzeichnet, dass** eine Kombination aus Reglerparametern von Scanregler (29) und/oder Lageregler (16) und/ oder Geschwindigkeitsregler (17) und/oder Stromregler (18) als Funktion des Abstandes des Tastelementes (12) von dem Referenzpunkt (14) des Berührungssensors (10) und/oder als Funktion der elastischen Eigenschaften des Abstandsstückes (13) in Abhängigkeit der jeweils eingewechselten Tasterkombination verändert wird.

8. Verfahren nach einem der vorhergehenden Ansprüche, **dadurch gekennzeichnet, dass** die ein Gewicht und eine Steifigkeit charakterisierenden Größen von Tastelementen (12) und Abstandsstücken (13) in einer Datenbank (26) abgespeichert sind und beim Einwechseln der jeweiligen Kombination aus Tastelement (12) und Abstandsstück (13) automatisch zu einer Anpassung der Reglerparameter verwendet werden.

9. Verfahren nach einem der Ansprüche 6 oder 7, **dadurch gekennzeichnet, dass** die zur Anpassung der Reglerparameter notwendigen charakteristischen Größen aus einem Ergebnis einer Tasterkalibrierung gewonnen werden.

10. Verfahren nach einem der vorhergehenden Ansprüche, **dadurch gekennzeichnet, dass** die Reglerparameter während eines Scanlaufes kontinuierlich angepasst werden.

11. Koordinatenmessgerät (1)

- mit einer Plattform (2) zur Aufnahme eines Werkstückes,
- mit mindestens einer Struktur, die einen Berührungssensor (10) trägt,
- wobei diese Struktur mindestens eine erste mechanische Eigenfrequenz aufweist,
- wobei die Plattform, die das Werkstück aufnimmt, und die Struktur, die den Berührungssensor (10) trägt, relativ zueinander beweglich sind,
- mit einem Taster (11), bestehend aus wenigstens einem Tastelement (12) und einem Abstandsstück, wobei das Tastelement (12) mit dem Berührungssensor (10) über das Abstandsstück verbunden ist, und dessen Berührung mit einem auf der Plattform angeordneten Werkstück von dem Berührungssensor (10) erkannt wird,
- mit einer motorischen Antriebseinheit zur Ausführung der Relativbewegung zwischen dem Werkstück und dem Tastelement (12),
- wobei die motorische Antriebseinheit mindestens eine zweite Eigenfrequenz aufweist, die verschieden ist von der ersten Eigenfrequenz der den Berührungssensor tragenden Struktur,
- mit einer Steuerung, die mindestens einen Regler (15) zur Regelung der motorischen Antriebseinheit aufweist,
- wobei der mindestens eine Regler (15) wenigstens einen Reglerparameter aufweist, der die Übertragungsfunktion des Reglers definiert,
**dadurch gekennzeichnet, dass** das Koordinatenmessgerät (1) eine Berechnungseinheit (27) aufweist, die als eine die die Übertragungsfunktion des wenigstens einen Reglers (15) charakterisierenden Reglerparameter als Funktion des Abstandes des Tastelementes (12) von einem Referenzpunkt (14) des Berührungssensors (10) und/oder als Funktion von elastischen Eigenschaften des Abstandsstückes (13) in Abhängigkeit von der jeweils eingewechselten Tasterkombination verändernde Berechnungseinheit ausgebildet ist, und dass die Berechnungseinheit (27) als eine den mindestens einen Reglerparameter derart verändernde Berechnungseinheit ausgebildet ist, dass der Reglerparameter sich zwischen den durch die erste Eigenfrequenz der den Berührungssensor tragenden Struktur und der durch die zweite Eigenfrequenz der motorischen Antriebseinheit definierten Grenzen bewegt.

12. Koordinatenmessgerät (1) nach Anspruch 11, **dadurch gekennzeichnet, dass** die Steuerung zusätzlich eine Datenbank (26) aufweist, in der die ein Gewicht und eine Steifigkeit charakterisierenden Größen von Tastelementen (12) und Abstandsstücken (13) für verschiedene Kombinationen von Tastelementen (12) und Abstandsstücken (13) abgelegt sind und bei Verwendung der jeweiligen Kombination zur Berechnung der Reglerparameter herangezogen werden.

13. Koordinatenmessgerät (1) nach Anspruch 11, **dadurch gekennzeichnet, dass** die Steuerung ein Modul aufweist, das als ein die Ergebnisse (28) einer Tasterkalibrierung zur Berechnung der Reglerparameter verwendendes Modul ausgebildet ist.

14. Koordinatenmessgerät (1) nach Anspruch 11, **dadurch gekennzeichnet, dass** der Berührungssensor (10) als schaltender Tastkopf oder als messender Tastkopf ausgebildet ist.

15. Koordinatenmessgerät (1) nach Anspruch 11, **dadurch gekennzeichnet, dass** das Koordinatenmessgerät drei lineare bewegliche Achsen (X, Y, Z) aufweist, die ein kartesisches Koordinatensystem aufspannen.

16. Koordinatenmessgerät (1) nach Anspruch 15, **dadurch gekennzeichnet, dass** das Koordinatenmessgerät zusätzlich mindestens eine rotatorische Achse aufweist.

17. Koordinatenmessgerät (1) nach Anspruch 11, **dadurch gekennzeichnet, dass** das Koordinatenmeßgerät ausschließlich rotatorische Achsen aufweist.

18. Koordinatenmessgerät (1) nach Anspruch 11, **dadurch gekennzeichnet, dass** der Regler (15) eine Kaskadenstruktur aufweist, wobei ein Lageregler (16) für die Lage einer zu regelnden Achse, ein Geschwindigkeitsregler (17) für die motorische Antriebseinheit und ein Stromregler (18) vorgesehen sind, und dass dem Lageregler (16) der Geschwindigkeitsregler (17) und dem Geschwindigkeitsregler (17) der Stromregler (18) unterlegt ist.

19. Koordinatenmessgerät (1) nach Anspruch 18, **dadurch gekennzeichnet, dass** dem Lageregler (16) ein Scanregler (29) überlagert ist.

20. Koordinatenmessgerät (1) nach Anspruch 11, **dadurch gekennzeichnet, dass** der Regler (15) als Zustandsregler ausgebildet oder als digitaler Regler ausgebildet ist.

**Claims**

1. A method of controlling a CNC-controlled coordinate measuring apparatus (1)

    - having a platform (2) to receive a workpiece,
    - having at least one structure, which bears a contact sensor (10),
    - wherein this structure has at least a first mechanical natural frequency,
    - wherein the platform (2), receiving the workpiece, and the structure, bearing the contact sensor (10), are movable relative to one another,
    - having a probe device (11), consisting of at least one probe element (12) and a distance piece (13), wherein the probe element is connected to the contact sensor via the distance piece and its contact with a workpiece arranged on the platform is detected by the contact sensor (10),
    - having at least one motive drive unit for effecting a relative motion between the workpiece and the probe element (12)
    - wherein the motive drive unit has at least a second natural frequency, differing from the first natural frequency of the structure bearing the contact sensor,
    - having at least one regulator (15) for regulating the drive unit, wherein the at least one regulator has at least one regulator parameter defining a transfer function of the regulator,
    **characterised in that** at least one of the regulator parameters is, as a function of the distance of the probe element (12) from a reference point (14) of the contact sensor (10) and/or as a function of elastic properties of the distance piece (13), altered dependent on the probe device (11) used for measuring in each case in such a manner that the regulator parameter moves between the thresholds defined by the first natural frequency of the structure bearing the contact sensor and by the second natural frequency of the motive drive unit.

2. A method according to claim 1, **characterised in that** a switching probe head (10) or a measuring probe head is used as contact sensor (10).

3. A method according to any one of the preceding claims, **characterised in that** a regulator (15) with a cascade structure is used, wherein a position regulator (16) for the position of an axis to be regulated, a speed regulator (17) for the speed of the motive drive unit and a current regulator (18) for the driving force or the torque of the motive drive unit are provided, and **in that** the speed regulator (17) is subordinate to the position regulator (16) and the current regulator (18) is subordinate to the speed regulator (17).

4. A method according to claim 3, **characterised in that** a scan regulator (29) is superimposed on the position regulator (16).

5. A method according to any one of claims 1 and 2, **characterised in that** a state regulator or a digital regulator is used as regulator (15).

6. A method according to any one of claims 3 and 4, **characterised in that** at least one regulator parameter of the scan regulator (29) or the position regulator (16) or the speed regulator (17) or the current regulator (18) is, as a function of the distance of the probe element (12) from the reference point (14) of the contact sensor (10) and/or as a function of the elastic properties of the distance piece (13), altered dependent on the probe combination changed in each case.

7. A method according to any one of claims 3 and 4, **characterised in that** a combination of regulator parameters of scan regulator (29) and/or position regulator (16) and/or speed regulator (17) and/or current regulator (18) is, as a function of the distance of the probe element (12) from the reference point (14) of the contact sensor (10) and/or as a function of the elastic properties of the distance piece (13), altered dependent on the probe combination changed in each case

8. A method according to any one of the preceding claims, **characterised in that** the values, characterising weight and stiffness, of probe elements (12) and distance pieces (13) are stored in a data bank (26) and, upon changing of the current combination of probe element (12) and distance piece (13), are automatically used to adapt the regulator parameters.

9. A method according to any one of claims 6 and 7, **characterised in that** the characteristic values necessary for adaptation of the regulator parameters are obtained from a result of a probe calibration.

10. A method according to any one of the preceding claims, **characterised in that** the regulator parameters are adapted continuously during a scan operation.

11. A coordinate measuring apparatus (1)

   - having a platform (2) to receive a workpiece,
   - having at least one structure, which bears a contact sensor (10),
   - wherein this structure has at least a first mechanical natural frequency,
   - wherein the platform, receiving the workpiece, and the structure, bearing the contact sensor (10), are movable relative to one another,
   - having a probe device (11), consisting of at least one probe element (12) and a distance piece, wherein the probe element (12) is connected to the contact sensor (10) via the distance piece and its contact with a workpiece arranged on the platform is detected by the contact sensor (10),
   - having a motive drive unit for effecting the relative motion between the workpiece and the probe element (12),
   - wherein the motive drive unit has at least a second natural frequency, differing from the first natural frequency of the structure bearing the contact sensor,
   - having a control means with at least one regulator (15) to regulate the motive drive unit,
   - wherein the at least one regulator (15) has at least one regulator parameter defining the transfer function of the at least one regulator,
   **characterised in that** the coordinate measuring apparatus (1) has a calculation unit (27), which is in the form of a calculation unit altering the regulator parameters characterising the transfer function of the at least one regulator, as a function of the distance of the probe element (12) from a reference point (14) of the contact sensor (10) and/or as a function of elastic properties of the distance piece (13), dependent on the probe combination changed in each case, and **in that** the calculation unit (27) is in the form of a calculation unit altering the at least one regulator parameter in such a manner that the regulator parameter moves between the thresholds defined by the first natural frequency of the structure bearing the contact sensor and by the second natural frequency of the motive drive unit.

12. A coordinate measuring apparatus (1) according to claim 11, **characterised in that** the control means additionally has a data bank (26) in which the values, characterising weight and stiffness, of probe elements (12) and distance pieces (13) are stored for different combinations of probe elements (12) and distance pieces (13) and are retrieved to calculate the regulator parameters when the respective combination is used.

13. A coordinate measuring apparatus (1) according to claim 11, **characterised in that** the control means has a module in the form of a module using the results (28) of a probe calibration to calculate the regulator parameters.

14. A coordinate measuring apparatus (1) according to claim 11, **characterised in that** the contact sensor (10) is in the form of a switching probe or a measuring probe.

15. A coordinate measuring apparatus (1) according to claim 11, **characterised in that** the coordinate measuring apparatus has three linear movable axes (X, Y, Z) spanning a Cartesian coordinate system.

16. A coordinate measuring apparatus (1) according to claim 15, **characterised in that** the coordinate measuring apparatus additionally has at least one rotatory axis.

17. A coordinate measuring apparatus (1) according to claim 11, **characterised in that** the coordinate measuring apparatus solely has rotatory axes.

18. A coordinate measuring apparatus (1) according to claim 11, **characterised in that** the regulator (15) has a cascade structure, wherein a position regulator (16) for the position of an axis to be regulated, a speed regulator (17) for the motive drive unit and a current regulator (18) are provided, and **in that** the speed regulator (17) is subordinate to the position regulator (16) and the current regulator (18) is subordinate to the speed regulator (17).

19. A coordinate measuring apparatus (1) according to claim 18, **characterised in that** a scan regulator (29) is superimposed on the position regulator (16).

**20.** A coordinate measuring apparatus (1) according to claim 11, **characterised in that** the regulator (15) is in the form of a state regulator or a digital regulator.


**Revendications**

**1.** Procédé permettant de commander un appareil de mesure de coordonnées contrôlé par CNC (1)

- avec une plate-forme (2) pour le logement d'une pièce à usiner,
- avec au moins une structure qui supporte un capteur de contact (10),
- cette structure présentant au moins une première fréquence mécanique propre,
- la plate-forme (2), qui loge la pièce à usiner, et la structure, qui supporte le capteur de contact (10), étant mobiles l'une par rapport à l'autre,
- avec un palpeur (11), constitué d'au moins un élément de palpage (12) et d'une entretoise (13), l'élément de palpage étant relié avec le capteur de contact par l'intermédiaire de l'entretoise, et dont le contact avec une pièce à usiner sur la plate-forme est détecté par le capteur de contact (10),
- avec au moins une unité d'entraînement motorisée pour la réalisation d'un mouvement relatif entre la pièce à usiner et l'élément de palpage (12),
- l'unité d'entraînement motorisée présentant au moins une deuxième fréquence propre qui est différente de la première fréquence propre de la structure supportant le capteur de contact,
- avec au moins un régulateur (15) pour la régulation de l'unité d'entraînement, l'au moins un régulateur comprenant au moins un paramètre de régulateur qui définit une fonction de transmission du régulateur,
**caractérisé en ce qu'**au moins un des paramètres de régulateur est modifié en fonction de la distance entre l'élément de palpage (12) et un point de référence (14) du capteur de contact (10) et/ou en fonction de propriétés élastiques de l'entretoise (13), selon le palpeur (11) utilisé pour la mesure, de façon à ce que le paramètre de régulateur se déplace entre les limitées définies par la première fréquence propre de la structure supportant le capteur de contact et par la deuxième fréquence propre de l'unité d'entraînement motorisée.

**2.** Procédé selon la revendication 1, **caractérisé en ce qu'**une tête de palpage à commutation (10) ou une tête de palpage de mesure est utilisée en tant que capteur de contact (10).

**3.** Procédé selon l'une des revendications précédentes, **caractérisé en ce qu'**un régulateur (15) est utilisé avec une structure en cascade, un régulateur de position (16) étant prévu pour la position d'un axe à réguler, un régulateur de vitesse (17) étant prévu pour la vitesse de l'unité d'entraînement motorisée et un régulateur de courant (18) étant prévu pour la force d'entraînement ou le couple de l'unité d'entraînement motorisée, et **en ce que** le régulateur de vitesse (17) est disposé en dessous du régulateur de position (16) et le régulateur de courant (18) est disposé en dessous du régulateur de vitesse (17).

**4.** Procédé selon la revendication 3, **caractérisé en ce qu'**un régulateur de balayage (29) est disposé au-dessus du régulateur de position (16).

**5.** Procédé selon l'une des revendications 1 ou 2, **caractérisé en ce qu'**un régulateur d'état ou un régulateur numérique est utilisé en tant que régulateur (15).

**6.** Procédé selon l'une des revendications 3 ou 4, **caractérisé en ce qu'**au moins un paramètre de régulateur du régulateur de balayage (29) ou du régulateur de position (16) ou du régulateur de vitesse (17) ou du régulateur de courant (18) est modifié en fonction de la distance entre l'élément de palpage (12) et le point de référence (14) du capteur de contact (10) et/ou en fonction des propriétés élastiques de l'entretoise (13), selon la combinaison de palpeurs entrée.

**7.** Procédé selon l'une des revendications 3 ou 4, **caractérisé en ce qu'**une combinaison de paramètres de régulateur du régulateur de balayage (29) et/ou du régulateur de position (16) et/ou du régulateur de vitesse (17) et/ou du régulateur de courant (18) est modifiée en fonction de la distance entre l'élément de palpage (12) et le point de référence (14) du capteur de contact (10) et/ou en fonction des propriétés élastiques de l'entretoise (13) selon la combinaison de palpeurs entrée.

**8.** Procédé selon l'une des revendications précédentes, **caractérisé en ce que** les grandeurs caractérisant un poids et une rigidité des éléments de palpage (12) et des entretoises (13) sont enregistrées dans une base de données (26) et, lors de l'entrée de la combinaison correspondante d'un élément de palpage (12) et d'une entretoise (13), sont utilisées automatiquement pour une adaptation des paramètres de régulation.

9. Procédé selon l'une des revendications 6 ou 7, **caractérisé en ce que** les grandeurs caractéristiques nécessaires pour l'adaptation des paramètres de régulation sont obtenues à partir du résultat d'un calibrage de palpeur.

10. Procédé selon l'une des revendications précédentes, **caractérisé en ce que** les paramètres de régulation sont adaptés en continu pendant un balayage.

11. Appareil de mesure de coordonnées (1),

   - avec une plate-forme (2) pour le logement d'une pièce à usiner,
   - avec au moins une structure qui supporte un capteur de contact (10),
   - cette structure présentant au moins une première fréquence propre,
   - la plate-forme, qui loge la pièce à usiner, et la structure, qui supporte le capteur de contact (10), étant mobiles l'une par rapport à l'autre,
   - avec un palpeur (11), constitué d'au moins un élément de palpage (12) et d'une entretoise, l'élément de palpage (12) étant relié avec le capteur de contact (10) par l'intermédiaire de l'entretoise, et dont le contact avec une pièce à usiner sur la plate-forme est détecté par le capteur de contact (10),
   - avec une unité d'entraînement motorisée pour la réalisation d'un mouvement relatif entre la pièce à usiner et l'élément de palpage (12),
   - l'unité d'entraînement motorisée présentant au moins une deuxième fréquence propre qui est différente de la première fréquence propre de la structure supportant le capteur de contact,
   - avec un dispositif de commande qui comprend au moins un régulateur (15) pour la régulation de l'unité d'entraînement motorisée,
   - l'au moins un régulateur (15) comprenant au moins un paramètre de régulateur qui définit une fonction de transmission du régulateur,
   **caractérisé en ce que** l'appareil de mesure de coordonnées (1) comprend une unité de calcul (27) qui est conçue comme une unité de calcul modifiant les paramètres de régulation caractéristiques de la fonction de transmission de l'au moins un régulateur (15) en fonction de la distance entre l'élément de palpage (12) et un point de référence (14) du capteur de contact (10) et/ou en fonction des propriétés élastiques de l'entretoise (13) selon la combinaison de palpeurs entrée et **en ce que** l'unité de calcul (27) est conçue comme unité de calcul modifiant l'au moins un paramètre de régulation de façon à ce que le paramètre de régulation se déplace entre les limites définies par la première fréquence propre de la structure supportant le capteur de contact et par la deuxième fréquence propre de l'unité d'entraînement motorisée.

12. Appareil de mesure de coordonnées (1) selon la revendication 11, **caractérisé en ce que** le dispositif de commande comprend en outre une base de données (26) dans laquelle sont enregistrées les grandeurs caractérisant un poids et une rigidité des éléments de palpage (12) et des entretoises (13) pour différentes combinaison d'éléments de palpage (12) et d'entretoises (13) et, sont utilisées lors de l'utilisation de la combinaison correspondante pour le calcul des paramètres de régulation.

13. Appareil de mesure de coordonnées (1) selon la revendication 11, **caractérisé en ce que** le dispositif de commande comprend un module qui est conçu comme un module utilisant les résultats (28) d'un calibrage de palpeur pour le calcul des paramètres de régulation.

14. Appareil de mesure de coordonnées (1) selon la revendication 11, **caractérisé en ce que** le capteur de contact (10) est conçu comme une tête de palpage à commutation ou comme une tête de palpage de mesure.

15. Appareil de mesure de coordonnées (1) selon la revendication 11, **caractérisé en ce que** l'appareil de mesure de coordonnées comprend trois axes (X, Y, Z) à déplacement linéaire qui constituent un système de coordonnées cartésiennes.

16. Appareil de mesure de coordonnées (1) selon la revendication 15, **caractérisé en ce que** l'appareil de mesure de coordonnées comprend en outre un axe rotatif.

17. Appareil de mesure de coordonnées (1) selon la revendication 11, **caractérisé en ce que** l'appareil de mesure de coordonnées comprend exclusivement des axes rotatifs.

**18.** Appareil de mesure de coordonnées (1) selon la revendication 11, **caractérisé en ce que** le régulateur (15) comprend une structure en cascade, un régulateur de position (16) étant prévu pour la position d'un axe à réguler, un régulateur de vitesse (17) étant prévu pour l'unité d'entraînement motorisée et un régulateur de courant (18) étant prévu et **en ce que** le régulateur de vitesse (17) est disposé en dessous du régulateur de position (16) et le régulateur de courant (18) est disposé en dessous du régulateur de vitesse (17).

**19.** Appareil de mesure de coordonnées (1) selon la revendication 18, **caractérisé en ce qu'**un régulateur de balayage (29) est superposé au régulateur de position (16).

**20.** Appareil de mesure de coordonnées (1) selon la revendication 11, **caractérisé en ce que** le régulateur (15) est conçu comme un régulateur d'état ou comme un régulateur numérique.

Fig. 1

Fig. 2

*Fig.3*

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10229821 B4
- DE 102005032749 A1
- DE 102005016019 A1
- EP 0469617 B1